# EUROPEAN PATENT SPECIFICATION

(11) **EP 2 008 269 B1**
(45) Date of publication and mention of the grant of the patent: **08.06.2011**
(21) Application number: 07732389.7
(22) Date of filing: 11.04.2007
(51) Int. Cl.: G10L 15/26, H04N 5/222, H04N 5/278, G10L 15/02

(54) **Speech driven prompt system and method**
Sprachgesteurtes Aufforderungs-system und -verfahren
Système et méthode de prompteur commandé par la voix

(30) Priority: 12.04.2006 GB 0607368
(43) Date of publication of application: 31.12.2008
(73) Proprietor: Sysmedia Ltd, Horley Surrey RH6 9ST (GB)
(72) Inventor: LAMBOURNE, Andrew, Flamstead, Hertfordshire AL3 8DE (GB); RANSON, Paul, Brackley, Northamptonshire NN13 7BU (GB)
(74) Representative: Driver, Virginia Rozanne
(86) International application number: PCT/GB2007/001346
(87) International publication number: WO 2007/129004

(56) References cited:
- EP-A- 0 896 467
- WO-A-2004/093078
- WO-A-2004/100164
- JP-A- 9 065 176
- US-B1- 6 272 461

## Description

The present invention relates to a speech driven prompt system for controlling the rate at which a pre-prepared text is displayed and to a corresponding method used therewith.

Speech driven prompt systems are for use in a situation where a speaker is to deliver a speech based on a text which has been prepared earlier. The speaker does not read from the text itself in paper format, but reads from a display screen containing a few lines of text which are scrolled at a rate to match the delivery rate of the speaker. In the past, a manual operator has controlled the scroll rate of the display to closely match the spoken delivery of the speaker. In this way, the speaker can deliver the speech without looking down at papers but just looking at the display. This is particularly useful for television presenters etc where they need to face a television camera while delivering the speech.

A manual operator works very effectively, but requires a human resource for the entire time that the speaker is delivering the speech.

As an alternative to a manual operator, it is known for a presenter to use foot controls or hand controls to scroll their own prompters. This however can be distracting for the presenter and requires additional training and concentration.

Attempts have been made to automate the system so that the rate of scrolling of the text on the screen can match the speaker's delivery without the need for a human operator. One such proposal is described in GB 2328069. According to that proposal, the text is scrolled automatically by a controller as the speaker speaks. The controller recognises the spoken words picked up by a microphone, using speech recognition techniques, and matches the spoken words with the stored text to be spoken. The speed at which the text is spoken is thus determined and used by a positioning circuit to address the rate at which the text scrolls up on the display. If the speech recognition fails, the text continues to be changed at a rate dependent upon the previous rate of change.

One problem with this technique is that it relies on computer-based speech recognition. This means that the controller needs to receive an electrical signal representative of the speech and apply it to a speech/text matching unit which uses speech recognition techniques to recognise the words being spoken and match them with the text being displayed. It is known to be difficult in speaker independent recognition to achieve consistently high levels of accuracy. Moreover, the speech recognition technique must recognise the words spoken, which means that it must be familiar with a full vocabulary of the text. This difficulty is overcome in GB 2328069 by constraining the number of words which are being examined for a match at any particular time to the words displayed to the speaker at that time. However, this requires a speech recognition process to reliably cooperate with the display. If the spoken words are not on the display, either because there has been a mismatch in timing or because the speaker has used different words, then the speech recognition technique can fail.

Another difficulty with the speech recognition technique is that there is inevitably a delay because the speaker has to finish a word before the speech recognition process can recognise it, and also because the process of speech recognition takes finite time and normally operates on a buffer of speech extending beyond the current word.

Moreover, because the system operates by setting a rate at which the text scrolls, matching the spoken text with the stored text and then adjusting the rate accordingly, a tight control loop is needed to ensure synchronisation.

It is an aim of the present invention to provide a speech driven control system and method which overcomes the above difficulties.

According to one aspect of the present invention there is provided a speech driven control system for controlling the rate at which a pre-prepared text is displayed to match the delivery rate of a speaker comprising: an audio input connected to receive an audio signal representing speech delivered by the speaker, said speech intended to match said pre-prepared text; means for converting the signal into observations; a data structure representing said pre-prepared text as a plurality of phonemes; means for comparing observations derived from the audio signal with phonemes in the data structure to determine the location in the text represented by the speech delivered by the speaker; and means for generating a display control signal for controlling the rate at which text is displayed based on the determined location.

Another aspect of the invention provides a method of controlling the rate at which a pre-prepared text is displayed to match the delivery rate of a speaker, based on speech delivered by a speaker, said speech intended to match the pre-prepared text, the method comprising: receiving an audio signal representing said speech; converting the signal into observations; comparing observations derived from the audio signal with phonemes in a data structure representing said pre-prepared text as a plurality of phonemes to determine the location in the text represented by the speech delivered by the speaker; and generating a display control signal for controlling the rate at which text is displayed based on the determined location.

The control system and method can be used in a situation to control the rate at which text is displayed to a speaker on a display so that the speaker can read the text from the display in order to deliver the speech. In this case, the system comprises means for calculating position information representing the position on the display of said location in the text for example, the current position of the scrolled text on the display (referred to herein as text or scroll position) is determined from the determined rate and time passed from the last scroll position. If needed, a correction signal can be fed back from the display to periodically correct the scroll position.

Another application of the system and method is to synchronise the display of subtitles on a screen, when a speaker reads the pre-prepared text. In this case, the process involves control of the rate of delivery of the text in order for it to be formed into subtitles, rather than the rate of presentation of the text on the display to be read by the speaker, and so no feed back position is required. It is possible that both applications (text display for a speaker and subtitling of the invention might be used together.

According to the approach described in the following embodiments, the representation of the text is constructed as phonemes, rather than words. This means that the text matching part is set to recognise pronounced sounds, phonemes, but does not need to recognise words as such. This has the advantage that the system needs only a phonetic model of the language and not a full language model and is relatively straightforward to adapt for other languages. It is also fairly forgiving towards foreign language words in the text.

A further significant advantage is a reduction in delay because the comparing step occurs during a word actually being spoken, rather than having to wait until a complete word has been spoken and recognised and delivered by a speech recogniser.

Moreover, the system is not based on a feedback control loop for the speed. The necessary rate of text display delivery can be determined continually, based on phoneme matching, so that it is appropriately adjusted on a continual basis.

The step of comparing observations comprises in one embodiment: creating an instance which identifies a group of phonemes by a group label and which includes a program count; evaluating a phoneme state defined in that instance against an observation and updating the instance with the result of the evaluation; updating the program count of the instance; and repeating for subsequent observations, wherein instances are created for each of a group of phoneme states.

For a better understanding of the present invention and to show how the same may be carried into effect, reference will now be made by way of example to the accompanying drawings in which:
Figure 1 is a schematic block diagram of a speech driven control system;
Figure 2 is a schematic block diagram illustrating the functionality of a control system in more detail;
Figure 3 is a state diagram of a Hidden Markov Model;
Figure 4 shows a sequence of two phoneme models;
Figures 5A and 5B illustrates operation of the phoneme comparison engine;
Figure 6 is a flow chart illustrating operation of a prompt controller to control the rate at which text is displayed; and
Figure 7 is a schematic block diagram of a subtitling system.

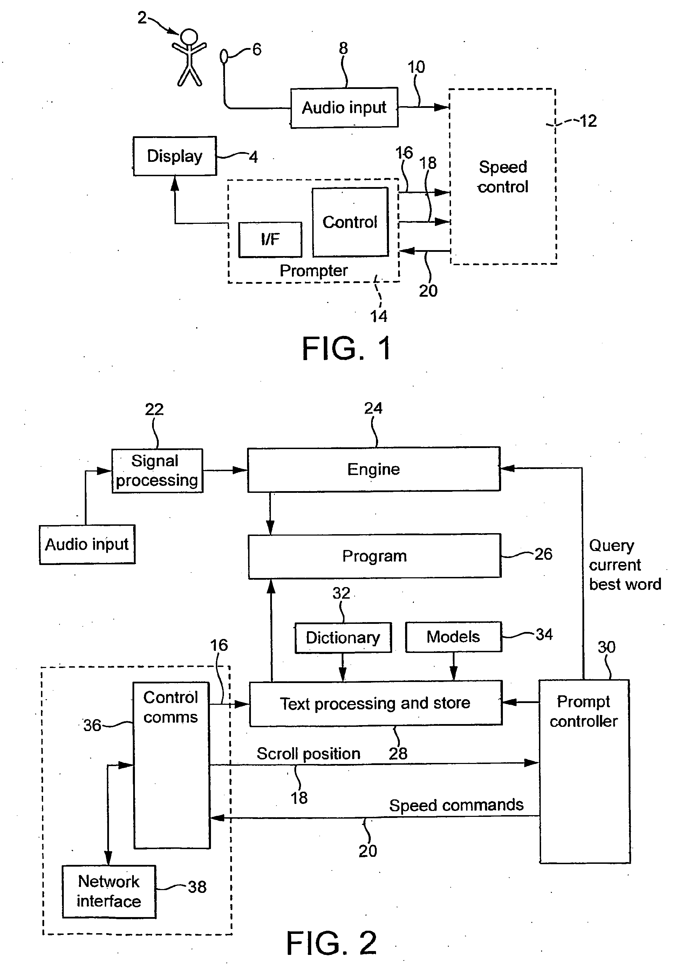

Figure 1 is a schematic block diagram of a speech driven prompt system. A newsreader or other broadcaster (speaker) 2 is located so that they can view a display 4 on which text is scrolled. Only a few lines (each of a few words) are displayed at any one time on the display, taken from a previously prepared script which is to be delivered by the speaker 2. As the speaker 2 reads out the words which are on the display, the text on the display scrolls to present the next set of words to be read out. The speech driven prompt system illustrated in Figure 1 provides an automated speed control signal 20 for scrolling the text in time with the speaker. A microphone 6 picks up speech from the speaker 2 and supplies it to an audio input 8. An analogue signal 10 from the audio input 8 is supplied to a speed control block 12. The speed control block 12 is connected to a prompter 14 which controls the rate at which text is displayed on the display 4. The prompter 14 supplies a text signal 16 and a position signal 18 to the speed control block 12. The speed control block 12 supplies a speed control signal 20 to the prompter 14. The prompter controls the rate of scrolling of text on the display 4 using the speed control signal 20.

Figure 2 shows a block diagram of the functionality in the speed control block 12. The speed control block 12 comprises a signal processing unit 22, an engine 24, a program 26 and a text processing and store unit 28. The engine 24 receives an audio signal from the signal processing unit 22 and a query signal from a prompt controller 30. The engine 24 executes the program 26, which is generated by the text processing and store unit 28 using a dictionary 32 and model store 34. The text processing and store unit 28 receives a query signal from the prompt controller 30. The text signal 16 from the prompter 14 is supplied to the text processing and store unit 28. The prompt controller 30 receives the position signal 18 and outputs the speed control signal 20.

Also illustrated in Figure 2 are the functional blocks in the prompter 14, comprising a control communications block 36 and a network interface 38.

Operation of the system will now be described.

The incoming audio signal 10 is sampled at 16kHz, 16 bits. The signal processing module 22 gathers it into chunks and then processes to produce 100 sets of 13 values each second. Each value represents a base parameter. The sets are produced in sequence, and each set of values is processed against the adjacent sets in time to produce two orders of difference values: (i) an indication of the velocity and (ii) acceleration of change to the 13 base parameters. The output is vectors of 39 values, the original values and the order of difference values, or "observations", produced 100 times a second. This type of processing of an audio signal is known in the art and so is not discussed in more detail herein. An appropriate method is Mel-Frequency Cepstral Coefficients (MFCC). The same method can be used to supply sampled observations for speech recognition purposes, but it is used herein in a different manner to match phonemes.

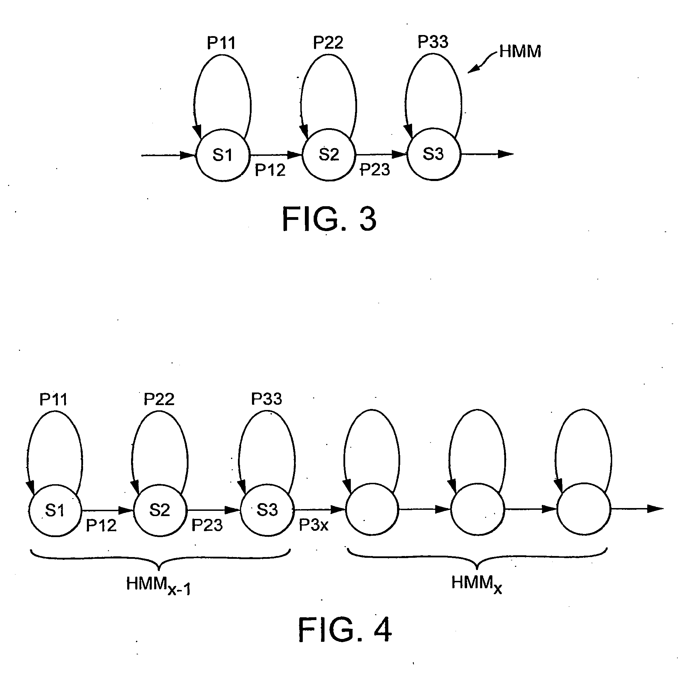

Words in a given language are assumed to be constructed from a relatively small set of phonemes, about 40 for English. It is further assumed that Hidden Markov Models (HMM) can be used to represent the phonemes. The HMM arrangement to describe a single phoneme can be considered a form of state machine, as shown in Figure 3.

The models stored in the model store 34 have three HMM states, S1, S2, S3. At each state the probability of transitioning to the next state (p12, p23) or remaining in the current state (p11, p22, p33) is controlled by a variable. The likelihood of a match between an observation and a state is governed by a probability distribution stored in the state, that is, the level of matching needed for each parameter to be determined as a true match to the equivalent parameter in an observation is held as a variable against that parameter. In practice, two variables are held for each value: a mean and a variance. The model store 34 holds with each set of vectors representing a state of a phoneme, an evaluator for that model state.

To follow speech, the dictionary 32 is used to translate the prepared text into a sequence of phonemes, each represented by an HMM. A single, concatenated HMM model for the entire speech is then assembled sequentially from the representative phoneme HMMs. See Figure 4 which illustrates two HMMs, HMMₓ-1, HMMₓ. A transition out of one phoneme model HMMₓ₋₁ is a transition into the next HMMₓ, the probability of such a transition is governed by the output probability of the earlier model in the sequence, p3x in Figure 4. It will readily be appreciated that there will be a large number of HMMs in the HMM model of the speech.

The aim is to find the best match between the sequence of observations coming from the signal processing module 22 and the sequence of states that could be generated by the concatenated HMM model. This is done as the observations are processed and the desired output is the best estimate of the word being currently spoken, which is derived from the most probable state of the concatenated HMM model. Note that the word is not recognised as such, but as the most likely collection of phonemes from the sequence delivered at processing time.

The engine 24 in Figure 2 carries out this matching. It takes the form of a virtual machine which processes a set of instructions (program 26) generated by the text processing module 28 and derived from the text, the dictionary and the model store 34. The text processing module 28 includes a compiler which operates on a data structure stored in the module 28 to provide the set of instructions The code to evaluate a three state HMM looks something like:
10 EVALUATE 00ADC6B0
11 FORK -0.464392, -1
12 IMPROB -0.990252
13 EVALUATE 00ADC7F0
14 FORK -1.6249, -1
15 IMPROB -0.219314
16 EVALUATE 00ADC930
17 FORK -0983104, -1
18 IMPROB -0.468641
19 RETURN

This is termed an evaluator, and the program 26 includes an evaluator for each phoneme translated by the dictionary.

The engine 24 manages a collection of "instances", somewhat analogous to an operating system "thread", each representing a possible path through the HMM states and contains a measure of goodness, its probability of being "correct"; compared with incoming observations. This is stored as a logarithmic probability in a logged record of each instance, rather than as a normal value. This means that it can be computed with addition, compared with normal probability operators and can get very small without overflowing. Moreover, the range is converted from 0 to 1 to 0 to minus infinity so that there is a much greater resolution from a standard floating point representation. The important factor is "most likely" rather than "how likely". The model store 34 holds 40 HMMs, each including a three state evaluator as defined above. The above is a specific example for one HMM, where the values 00ADC6B0, 00ADC7F0, 00ADC930 represent memory locations for the evaluate instructions to access the variables which describe how close an observation value needs to be to match the corresponding value of a stored state, the arguments -0.464392, -0.990252 etc. represent logarithmic probabilities (as discussed later) and the -1 represents an addition to a program count for each instance, also discussed later. Note that e-0.464392 + e-0.990252 = 1.

The text is held in a text store in the form of a data structure as follows, with each word being identified by a word label. The dictionary 32 holds for each word the phonemes from which it is constructed: in the case of word 0 below, phonemes represented by evaluator identifiers 10, 80 and 191. In this example the evaluator identifier points to the first program line of the evaluators for that phoneme.

The code to follow a word (e.g. word 0) is simply a label for the word (WORD_LABEL 0) followed by a series of "calls" to the different HMM evaluators matching the phonemes as translated by the dictionary. For example:
421 WORD_LABEL 0
422 CALL 10
423 CALL 80
424 CALL 191

CALL 10 calls the above evaluator for phoneme model HMMₓ₋₁, while CALL 80, CALL 191 call evaluators for the other phonemes forming part of the word identified by WORD_LABEL 0.

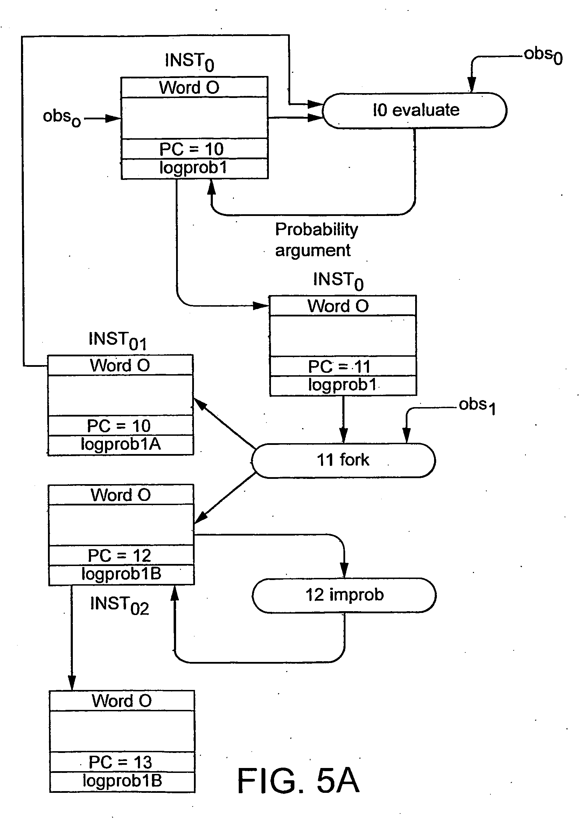

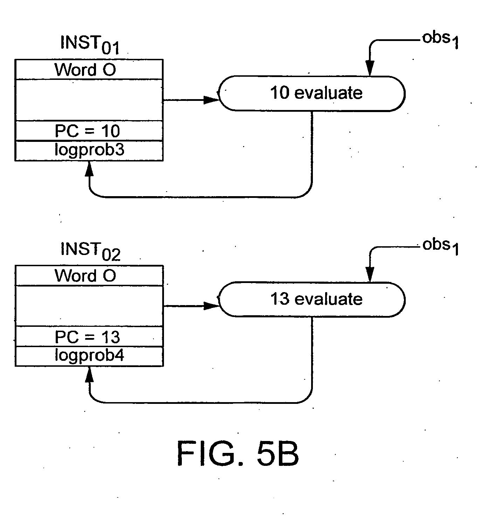

Reference will now be made to Figures 5A and 5B to explain operation of the engine to form phoneme matching between incoming observations and text phonemes. When following is initiated the engine 24 takes an instance INST₀, gives it the first observation obs₀ received from the signal processing module 22 and starts it running. The instance records that it is processing word 0 and transfers to the directed HMM, where it immediately encounters an "EVALUATE" instruction. This causes it to update its internal record of logarithmic probability "logprob" with the result of a calculation that determines how well the observation fits the state. It then updates its PC and stops. When the next observation obs₁ is received the processing restarts. The next instruction is "FORK" which causes the instance to split into two otherwise identical structures, INST₀₁, INST₀₂, with their logprob records holding probability values adding up to the result of the EVALUATE calculation in the instance INST₀. One INST₀₁ adjusts its logprob account by the first argument of the FORK instruction (logprob 1A = -0.464392) and program counter by the second, the other continues, processes the "improb" instruction causing an adjustment (logprob1B=-0.990252) to its logprob record, and updates its PC. The adjustment factors add up to 1. Now both instances are at "EVALUATE" instructions, so they perform the evaluation and stop. This is repeated for each observation. It is obvious that the number of instances will grow exponentially. There are two internal mechanisms for controlling instance growth. The first prevents two instances from occupying the same state in the same word. When this happens the one with the worse logprob score is deleted. Should the total count of instances go above a threshold then the set of instances is pruned in order of least probability until the count goes back below the threshold. In practice with read speech this is seldom necessary. A third external mechanism is deployed to remove instances that relate to words the system is confident have already been spoken. The aim of the code is to establish for a given sequence of observations what the probability is that they represent a certain sequence of states s1 ... sN. So the observations are compared against states s1 ... sN,
O1:s1
O2:s1, s2 (s1, s1 or s1, s2)
O3:s1, s2, s3 (s1, s1 ,s1, or s1, s1, s2, or s1, s2, s2, or s1, s2, s3) ...
to produce a logprob value for every possible sequence of states that could have produced the sequence of observations. For practical reasons the less likely sequences are eliminated, otherwise after one second of audio there would be 2^100 possibilities to choose from.

So now the engine 24 has a collection of instances at different places in the program, with differing probabilities of being a good match. The prompt controller 30 can query the engine at any time for the instance it currently considers the best match, and retrieve from that the word the instance is processing as recorded by the label of the instance. It is assumed that this word is a good estimate (at least the best estimate) for the word currently being spoken.

It is important to note that this current best estimate is not stable. It will jump forwards and backwards as the incoming audio signals from audio input 8 are processed and the evaluations update. This instability is exploited by using a filter to damp its effects, but accepting the instantaneous value at any time for the purposes of processing scroll speed for the prompter. This helps to minimise the delay between the words being spoken and the follower searching. In essence the first guess is used and then any error corrected, rather than waiting for greater certainty. Because there is only a small number of words on display, it is particularly important that system can reach quickly and accurately.

The operation of the prompt controller will now be described. All calculations in the prompt controller are performed in "scan lines" which directly relate to pixels on the prompt display device 4. The prompt controller runs about 10 times a second and keeps track of where the scroll is by calculation from the time and the scroll speed. That is, the prompt controller calculates the scroll position. Each 64 scan lines that are scrolled by the prompter a message (position signal 18) is sent that is used by the prompt controller to update its internal record of the text/scroll position on the display. Correction may be required because of timing issues and network delays.

Prior to speech following being initiated the prompter delivers the text that is expected to be read, formatted into lines as will be displayed and for each line the height of that line on the output in scan lines. The height table means that the prompt controller can calculate where every text line on the prompter starts and finishes, and where every line of text appearing on the prompt output is positioned.

When the text processing unit 28 converts the text into the data structure for the engine it records the expected duration of each word and also accounts for implicit pauses indicated by punctuation. This duration is calculated from the phoneme translation and a table of average phoneme duration at a typical read rate, held in the dictionary 32. The expected duration of each word and any punctuation is stored in the text processing unit 28.

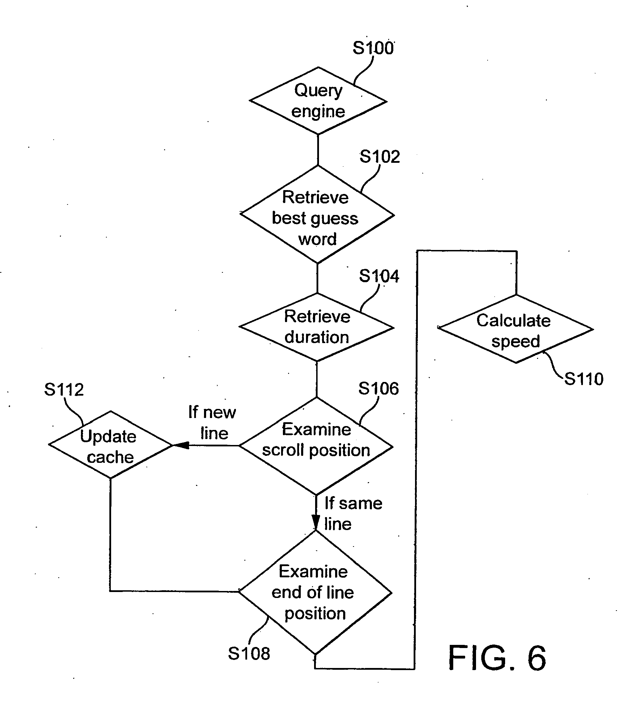

Figure 6 is a flow chart illustrating operation of the prompt controller.

Every time the prompt controller runs it queries the engine (S100) for the current best guess word and retrieves it (S102), queries the text processing unit for the estimated duration from that word (S104) to the end of the line, looks at the current scroll position (S106) as calculated by the prompt controller and corrected as described, the scroll position at the end of the text line (S108), and calculates (S110) a scroll speed to cause scrolling to reach the end of the line at the same time as the speech is anticipated to reach it. When the prompt controller queries the engine and determines from the guessed word that the speech has moved to a new line of text it updates (S112) a cache of where the new text line will end in scroll lines. If the current position is beyond the end of the current line then scrolling is stopped. The prompter is never scrolled backwards.

The aim is for a line which has just been read to be scrolled to just above a "read point", so the line which the speaker is about to read is then at the read point and the next line just below it.

The resulting desired scroll speed is converted to the speed code in the prompt controller for the prompter that most nearly matches it, passed through a filter that limits the rate of change of speed, and sent to the prompter. The necessary speed is calculated sufficiently frequently to avoid the build upon significant errors.

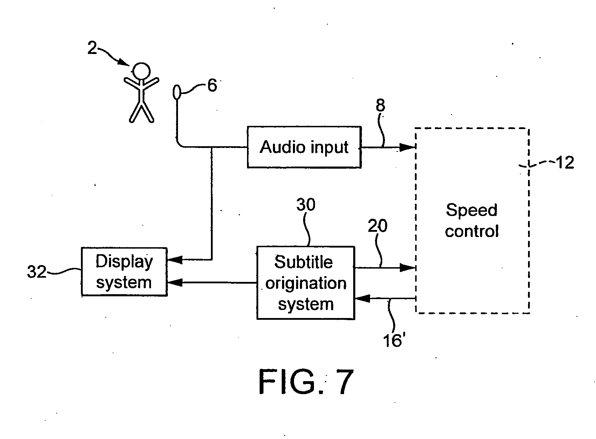

In the above description, the phoneme matching technique has been used to control the rate at which text is displayed to a speaker who is delivering a pre-prepared speech. The same technique can also be used to generate subtitles for display during a broadcast transmission or meeting in time with an audio signal representing the speech. Figure 7 is a block diagram illustrating this. Like numerals denote like parts as in Figure 1. A speaker 2 reads words from a pre-prepared script (either using a prompt system as described above, or from hard copy or from memory), and the speech is picked up by the microphone 6 and supplied to an audio input 8. This can also provide the audio signal for a broadcast or public address unit 32. As before, the audio input is fed into a speed control block 12 and processed as described above in a signal processing unit. A subtitle origination system 30 provides a text signal 16 to the speed control block 12 and receives a speed control signal 20. There is no need to supply a position signal, like the signal 18 in Figure 1. Phoneme matching and rate determination occurs as described above and the subtitle origination system is thus controlled to supply subtitles to a subtitle broadcast or open caption display system 32 in time with the audio signal. The audio and display delivery system 32 can be an in-house display with an associated PA system for example, or a transmission system for broadcast purposes to a television or the like.

## Claims

1. A speech driven control system for controlling the rate at which a pre-prepared text is to be displayed to match the delivery rate of a speaker comprising:
an audio input connected to receive an audio signal (10) representing speech delivered by the speaker (2), said speech intended to match said pre-prepared text, and **characterised by**:
means (22) for converting the signal into observations;
a data structure representing said pre-prepared text as a plurality of phonemes;
means (24,26) for comparing observations derived from the audio signal with phonemes in the data structure to determine at any time the location in the text represented by the speech delivered by the speaker; and
means (30) for generating a display control signal (20) for controlling the rate at which text is displayed based on the determined location.

2. A speech driven control system according to claim 1, which comprises means (30) for calculating position information representing the position on the display of said location in the text.

3. A speech driven control system according to claim 2, which comprises means (30) for determining the rate at which text is to be displayed on the display for a speaker to deliver, based on said position information.

4. A speech driven control system according to any preceding claim, which comprises means (14) responsive to said display control signal for scrolling said text on a display, line by line.

5. A speech driven control system according to claims 3 and 4, wherein said means for determining the rate is operable to determine an expected duration from said determined location in the text to an end of a line, and to use said determined duration to determine the rate at which text is displayed.

6. A speech driven control system according to any preceding claim, in which said data structure comprises said plurality of phonemes organised in groups, each group having a group label.

7. A speech driven control system according to claim 6, wherein each group represents a word.

8. A speech driven control system according to claims 2 or 3, comprising means for receiving a position confirmation signal (18) from a display on which said text is displayed, said position confirmation signal being used to derive a correction for said position information as required.

9. A speech driven control system according to claim 1, wherein the text is delivered as subtitles which are displayed on a display as a speaker reads from said pre-prepared text.

10. A speech driven control system according to any preceding claim, wherein said means for comparing observations derived from the audio signal with phonemes in the data structure comprises a processing engine (24) arranged to execute a set of instructions (26) derived from said data structure and pre-stored phoneme models.

11. A speech driven control system according to claim 10, wherein said phoneme models are Hidden Markov Models comprising a set of parameter values for each of a plurality of states.

12. A speech driven control system according to any preceding claim, wherein each observation comprises a set of values for each of a plurality of parameters, each set of values comprising a base value for the parameter, an indication of the velocity of change from the base value and an indication of the acceleration of change from the base value.

13. A method of controlling the rate at which a pre-prepared text is displayed, based on speech delivered by a speaker (2) to match the delivery rate of the speaker, said speech intended to match the pre-prepared text, the method comprising:
receiving an audio signal (10) representing said speech, and **characterised by**:
converting the signal into observations;
comparing observations derived from the audio signal (10) with phonemes in a data structure representing said pre-prepared text as a plurality of phonemes to determine at any time the location in the text represented by the speech delivered by the speaker; and
generating a display control signal (20) for controlling the rate at which text is displayed based on the determined location.

14. A method according to claim 13, which comprises the step (S106) of receiving position information identifying the position on a display of said location in the text.

15. A method according to claim 14, wherein said step of generating a display control signal comprises using said position information to determine the rate at which text is displayed.

16. A method according to claim 13, wherein said text is delivered as subtitles which are displayed as a speaker delivers said speech from the pre-prepared text.

17. A method according to claim 13, wherein the step of comparing observations comprises:
creating an instance which identifies a group of phonemes by a group label and which includes a program count and a probability record;
evaluating a phoneme state defined in that instance against an observation and updating the probability record of the instance with the result of the evaluation;
updating the program count of the instance; and
repeating for subsequent observations, wherein instances are created for each of a group of phoneme states.

18. A method according to claim 17, wherein, after the evaluation step, the method causes the instance to split into two instances, each recording a different probability in its probability record, wherein the sum of the probabilities recorded by the two instances add up to said result.

## Patentansprüche

1. Sprachgesteuertes Steuersystem zum Steuern der Rate mit der ein bereits vorbereiteter Text ausgegeben werden soll, so dass die Textausgabe mit der Sprechgeschwindigkeit eines Redners übereinstimmt, wobei das Steuersystem aufweist:
einen Audioeingang, der zum Empfangen eines Audiosignals (10) geschaltet ist, wobei das Audiosignal vom Redner stammende Sprache repräsentiert und wobei die Sprache mit dem bereits vorbereiteten Text übereinstimmen soll, **gekennzeichnet durch**:
Mittel (22) zum Umwandeln des Signals in Beobachtungen;
eine Datenstruktur die den bereits vorbereiteten Text in Form einer Vielzahl von Lauten repräsentiert;
Mittel (24, 26) zum Vergleichen der aus dem Audiosignal abgeleiteten Beobachtungen mit Lauten aus der Datenstruktur, um jederzeit jene Stelle in dem Text, der **durch** die von dem Redner stammende Sprache repräsentiert wird, festzustellen; und
Mittel (30) zum Erzeugen eines Displaysteuersignals zum steuern der Rate mit der Text ausgegeben wird, basierend auf der ermittelten Stelle.

2. Sprachgesteuertes Steuersystem gemäß Anspruch 1, das aufweist:
Mittel (30) zum Berechnen von Positionsinformationen, die auf dem Display die Position der Stelle in dem Text repräsentieren.

3. Sprachgesteuertes Steuersystem gemäß Anspruch 2, das aufweist:
Mittel (30) zum Bestimmen der Rate mit der ein vom Redner vorgetragender Text auf dem Display basierend auf den Positionsinformationen ausgegeben werden soll.

4. Sprachgesteuertes Steuersystem gemäß einem der vorhergehenden Ansprüche, das aufweist:
Mittel (14), die zum zeilenweisen Scrollen des Textes auf einem Display auf das Displaysteuersignal reagieren.

5. Sprachgesteuertes Steuersystem gemäß Anspruch 3 und 4, bei dem das Mittel zum Bestimmen der Rate betrieben werden kann zum Ermitteln einer erwarteten Dauer von der ermittelten Stelle in dem Text bis zu einem Zeilenende und zum Verwenden der ermittelten Dauer zum Bestimmen der Rate mit der der Text ausgegeben wird.

6. Sprachgesteuertes Steuersystem gemäß einem der vorhergehenden Ansprüche, bei dem die Datenstruktur die Vielzahl von Lauten aufweist, wobei die Laute in Gruppen gegliedert sind mit einer Marke für jede Gruppe.

7. Sprachgesteuertes Steuersystem gemäß Anspruch 6, bei dem jede Gruppe ein Wort repräsentiert.

8. Sprachgesteuertes Steuersystem gemäß einem der Anspruche 2 oder 3, das aufweist:
Mittel zum Empfangen eines Positionsbestätigungs-Signals (18) von einem Display, auf dem der Text ausgegeben wird, wobei das Positionsbestätigungs-Signal, wenn erforderlich, zum Ableiten einer Korrektur für die Positionsinformationen verwendet wird.

9. Sprachgesteuertes Steuersystem gemäß einem der vorhergehenden Ansprüche, bei dem der Text in Form von Untertiteln ausgegeben wird, die auf einem Display dargestellt werden während ein Redner aus dem bereits vorbereiteten Text vorliest.

10. Sprachgesteuertes Steuersystem gemäß einem der vorhergehenden Ansprüche, bei dem das Mittel zum Vergleichen der aus dem Audiosignal abgeleiteten Beobachtungen mit Lauten in der Datenstruktur aufweist:
eine Verarbeitungseinheit (24), die dazu ausgebildet ist,
einen Satz von Anweisungen (26) von der Datenstruktur und den vorgespeicherten Lautmodellen auszuführen.

11. Sprachgesteuertes Steuersystem gemäß Anspruch 10, bei dem die Lautmodelle Hidden-Markov-Modelle sind, die aufweisen:
einen Satz Parameterwerte für jeden aus einer Vielzahl von Zuständen.

12. Sprachgesteuertes Steuersystem gemäß einem der vorhergehenden Ansprüche, bei dem jede Beobachtung aufweist:
einen Wertesatz für jeden aus einer Vielzahl von Parametern, wobei jeder Wertesatz einen Parameter-Basiswert, eine Indikation für die Änderungsgeschwindigkeit ausgehend vom Basiswert und eine Indikation für die Änderungsbeschleunigung ausgehend vom Basiswert aufweist.

13. Verfahren zum Steuern der Rate mit der ein bereits vorbereiteter Text ausgegeben werden soll, basierend auf einer von einem Redner (2) stammenden Sprache, so dass die Textausgabe mit der Sprechgeschwindigkeit des Redners übereinstimmt, wobei die Sprache mit dem bereits vorbereiteten Text übereinstimmen soll und wobei das Verfahren aufweist:
Empfangen eines die Sprache repräsentierenden Audiosignals (10), charakterisiert durch:
Umwandeln des Signals in Beobachtungen;
Vergleichen der aus dem Audiosignal (10) abgeleiteten Beobachtungen mit Lauten aus einer Datenstruktur, wobei die Datenstruktur den bereits vorbereiteten Text in Form einer Vielzahl von Lauten repräsentiert, um jederzeit die Stelle in dem Text, der durch die von dem Redner stammende Sprache repräsentiert wird, festzustellen; und
Erzeugen eines Displaysteuersignals (20) zum Steuern der Rate mit der der Text ausgegeben wird, basierend auf der festgestellten Stelle.

14. Verfahren gemäß Anspruch 13, das folgenden Schritt (S106) aufweist:
Empfangen von Positionsinformationen, die die Position der Stelle in dem Text auf einem Display anzeigen.

15. Verfahren gemäß Anspruch 14, bei dem der Schritt zum Erzeugen eines Displaysteuersignals aufweist:
Verwenden der Positionsinformationen zum Bestimmen der Rate mit der der Text ausgegeben wird.

16. Verfahren gemäß Anspruch 13, bei dem der Text in Form von Untertiteln ausgegeben wird, die auf einem Display dargestellt werden, während ein Redner aus dem bereits vorbereiteten Text liest.

17. Verfahren gemäß Anspruch 13, bei dem der Schritt des Vergleichens von Beobachtungen aufweist:
Erzeugen einer Instanz, die eine Gruppe von Lauten mittels einer Gruppenmarke bezeichnet und die eine Programmzählerstand sowie einen Wahrscheinlicheintrag beinhaltet;
Evaluieren eines in dieser Instanz definierten Lautzustandes hinsichtlich der Beobachtung, und Updaten des Wahrscheinlichkeitseintrags der Instanz mit dem Ergebnis der Auswertung;
Updaten des Programmzählerstandes der Instanz; und
Wiederholen für nachfolgende Beobachtungen, wobei Instanzen für jeden Zustand aus einer Gruppe von Lautzuständen generiert werden.

18. Verfahren gemäß Anspruch 17, bei dem das Verfahren nach dem Auswerte-Schritt bewirkt, dass die Instanz in zwei Instanzen aufgespaltet wird, wobei jede der Instanzen eine andere Wahrscheinlichkeit in seinem Wahrscheinlichkeitseintrag aufzeichnet und wobei die Summe der von den beiden Instanzen aufgezeichneten Wahrscheinlichkeiten das Ergebnis ergibt.

## Revendications

1. Système de commande piloté par la parole, destiné à commander la vitesse à laquelle un texte prétraité va être affiché, afin de s'adapter à la vitesse de prononciation d'un locuteur, comprenant :
une entrée audio connectée pour recevoir un signal audio (10) représentant la parole prononcée par le locuteur (2), ladite parole devant correspondre audit texte prétraité ; et
**caractérisé par** :
un moyen (22) destiné à convertir le signal en observations ;
une structure de données représentant ledit texte prétraité sous la forme d'une pluralité de phonèmes ;
un moyen (24, 26) destiné à comparer des observations dérivées du signal audio avec des phonèmes de la structure de données, afin de déterminer à tout instant l'emplacement dans le texte que représente la parole prononcée par le locuteur ; et
un moyen (30) destiné à produire un signal de commande de l'affichage (20), afin de commander la vitesse à laquelle le texte est affiché, sur la base de l'emplacement déterminé.

2. Système de commande piloté par la parole selon la revendication 1, comprenant un moyen (30) destiné à calculer des informations de position représentant la position à l'écran dudit emplacement dans le texte.

3. Système de commande piloté par la parole selon la revendication 2, comprenant un moyen (30) destiné à déterminer la vitesse à laquelle le texte doit être affiché à l'écran pour être prononcé par un locuteur, sur la base desdites informations de position.

4. Système de commande piloté par la parole selon l'une quelconque des revendications précédentes, comprenant un moyen (14) destiné, en réponse audit signal de commande de l'affichage, à faire défiler ligne par ligne ledit texte sur un écran.

5. Système de commande piloté par la parole selon les revendications 3 et 4, dans lequel ledit moyen de détermination de la vitesse est en mesure de déterminer une durée prévue entre ledit emplacement déterminé dans le texte et une fin de ligne et d'utiliser ladite durée déterminée pour déterminer la vitesse à laquelle le texte est affiché.

6. Système de commande piloté par la parole selon l'une quelconque des revendications précédentes, dans lequel ladite structure de données comprend ladite pluralité de phonèmes organisée en groupes, chaque groupe possédant une étiquette de groupe.

7. Système de commande piloté par la parole selon la revendication 6, dans lequel chaque groupe représente un mot.

8. Système de commande piloté par la parole selon la revendication 2 ou 3, comprenant un moyen destiné à recevoir un signal de confirmation de position (18) en provenance d'un écran d'affichage sur lequel ledit texte est affiché, ledit signal de confirmation de position étant utilisé pour en dériver une correction desdites informations de position si besoin est.

9. Système de commande piloté par la parole selon la revendication 1, dans lequel le texte est fourni sous la forme de sous-titres qui sont affichés sur un écran tandis qu'un locuteur lit ledit texte prétraité.

10. Système de commande piloté par la parole selon l'une quelconque des revendications précédentes, dans lequel ledit moyen de comparaison d'observations dérivées du signal audio avec des phonèmes de la structure de données comprend un moteur de traitement (24) conçu pour exécuter un ensemble d'instructions (26) dérivées de ladite structure de données et de modèles de phonèmes pré-mémorisés.

11. Système de commande piloté par la parole selon la revendication 10, dans lequel lesdits modèles de phonèmes sont des modèles de Markov cachés comprenant un ensemble de valeurs de paramètres pour chacun des états dans une pluralité d'états.

12. Système de commande piloté par la parole selon l'une quelconque des revendications précédentes, dans lequel chaque observation comprend un ensemble de valeurs pour chaque paramètre parmi une pluralité de paramètres, chaque ensemble de valeurs comprenant une valeur de base pour le paramètre, une indication de la vitesse de changement à partir de la valeur de base et une indication de l'accélération du changement à partir de la valeur de base.

13. Procédé de commande de la vitesse à laquelle est affiché un texte prétraité, sur la base de la parole prononcée par un locuteur (2), afin de correspondre à la vitesse de prononciation du locuteur, ladite parole devant correspondre au texte prétraité, le procédé comprenant l'étape consistant à :
recevoir un signal audio (10) représentant ladite parole ; et
**caractérisé par** les étapes consistant à :
convertir le signal en observations ;
comparer les observations dérivées du signal audio (10) avec des phonèmes dans une structure de données représentant ledit texte prétraité sous la forme d'une pluralité de phonèmes, afin de déterminer à tout instant l'emplacement dans le texte que représente la parole prononcée par le locuteur ; et
produire un signal de commande de l'affichage (20) destiné à commander la vitesse à laquelle le texte est affiché, en fonction de l'emplacement déterminé.

14. Procédé selon la revendication 13, comprenant en outre l'étape (S106) consistant à recevoir des informations de position identifiant la position à l'écran dudit emplacement dans le texte.

15. Procédé selon la revendication 14, dans lequel ladite étape de production d'un signal de commande de l'affichage comprend l'étape consistant à utiliser lesdites informations de position pour déterminer la vitesse à laquelle le texte est affiché.

16. Procédé selon la revendication 13, dans lequel le texte est fourni sous la forme de sous-titres qui sont affichés sur un écran tandis qu'un locuteur lit ledit texte prétraité.

17. Procédé selon la revendication 13, dans lequel l'étape de comparaison des observations comprend en outre les étapes consistant à :
créer une instance qui identifie un groupe de phonèmes par une étiquette de groupe et qui inclut un compteur de programme et un enregistrement de probabilité ;
évaluer un état de phonème défini dans cette instance en fonction d'une observation et mettre à jour l'enregistrement de probabilité de l'instance à l'aide du résultat de l'évaluation ;
mettre à jour le compteur de programme de l'instance ; et
répéter pour des observations ultérieures, des instances étant créées pour chacun des états d'un groupe d'états de phonèmes.

18. Procédé selon la revendication 17, dans lequel, après l'étape d'évaluation, le procédé commande à l'instance de se subdiviser en deux instances, chacune enregistrant une probabilité différente dans son enregistrement de probabilité, la somme des probabilités enregistrées dans les deux instances correspondant audit résultat.
